# EUROPÄISCHE PATENTANMELDUNG

(11) **EP 0 648 855 A1**
(43) Veröffentlichungstag der Anmeldung: **19.04.1995**
(21) Anmeldenummer: 94250226.1
(22) Anmeldetag: 12.09.1994
(51) Int. Cl.: C22F 1/08

(54) **Herstellverfahren für nahtlose Rohre aus Nichteisenmetallen, insbesondere Kupfer und Kupferlegierungen**

(30) Priorität: 17.09.1993 DE 4332136
(71) Anmelder: MANNESMANN Aktiengesellschaft, D-40213 Düsseldorf (DE)
(72) Erfinder: Häusler, Karl Heinz, D-41352 Korsochenbroich (DE); Unger, Andreas, Dr.-Ing., D-06333 Hettstedt (DE); Roller, Erling, Dr.-Ing., D-45133 Essen (DE)
(74) Vertreter: Meissner, Peter E., Dipl.-Ing.

(57) **Zusammenfassung**

Zur Erreichung einer gleichmäßigen und gezielten Rekristallisation mit geringem Energieeinsatz wird bei der Herstellung für nahtlose Rohre aus Nichteisenmetallen, insbesondere Kupfer und Kupferlegierungen vorgeschlagen, daß halbfertige Rohr im Anschluß an den ersten Kaltformprozeß und ggf. weitere Kaltumformschritte zu einem Coil aufzuwickeln und als Coil dem Rekristallisationsprozeß zu unterwerfen.

## Beschreibung

Die Erfindung betrifft ein Herstellverfahren für nahtlose Rohre aus Nichteisenmetallen, insbesondere Kupfer und Kupferlegierungen, wobei ein stranggegossener Hohlkörper in einem Kaltformprozeß und ggfs. weiteren Bearbeitungsstufen zu dem Rohr ausgeformt und einem Rekristallisationsprozeß unterzogen wird.

Zur Herstellung von Halbzeug und Rohren aus Kupfer und Kupferlegierungen ist es bekannt, im Blockgußverfahren hergestellte runde Barren zunächst einer Warmformung und dann einer Kaltformung zuzuführen, wobei die Warmformung beispielsweise durch Strangpressen oder Walzen in einem Stopfenwalzwerk vorgenommen werden kann. Als kaltformstufe kommen das Ziehen und Walzen, insbesondere in einem Pilgerschrittwalzwerk in Betracht.

Zur Verringerung der Arbeitsstufen ist man zunehmend dazu übergegangen, stranggegossenes Vormaterial einzusetzen, wobei sowohl Blöcke wie auch stranggegossene Hohlkörper Verwendung finden. Dabei ist zu berücksichtigen, daß die Kristallstruktur des stranggegossenen Vormaterials grob kristallin und inhomogen ist, so daß der Werkstoff bei der Kaltweiterverarbeitung mit höheren Streckgraden zu Rissen neigt. Dies macht ein Zwischenglühen zur Rekristallisation des Gefüges erforderlich. Der Fachwelt ist bekannt, daß ein Gußgefüge aus Kupfer oder Kupferlegierungen, bevor es rekristallisiert werden kann, einer mindestens 50-prozentigen Querschnittsreduktion unterzogen werden sollte.

Aus der DE 38 10 261 A1 ist ein Verfahren zum Herstellen von Rohren aus Nichteisenmetallen bekannt geworden, das sich mit der Gefügeverbesserung des gewalzten Rohres durch Rekristallisation befaßt. Vorschlag des bekannten Verfahrens ist es, die im Verlauf der Kaltverformung stattfindende Querschnittsflächenminderung und die innere Reibung des Materials zu benutzen, um die durch den Verformungswiderstand ansteigenden Temperaturen auf eine solche Höhe zu führen, die der Rekristallisationstemperatur des zu walzenden Werkstoffes entspricht bzw. diese überschreitet. Dieses Verfahren läßt sich nach den Ausführungen in der Patentanmeldung besonders günstig durch Walzen des Rohres in einem Planetenwalzwerk durchführen; es wird aber auch in einem Ausführungsbeispiel die Verwendung eines Pilgerschrittwalzwerkes zum Auswalzen eines Strangguß-Rohrmantels behandelt.

Es wurde herausgefunden, daß das vorbekannte Verfahren mit Pilgerschrittwalzwerken nicht erfolgversprechend ausgeführt werden kann, und zwar weil Pilgerwalzverfahren im Gegensatz zu dem in der DE 38 10 261 A1 beschriebenen Planetenschrägwalzverfahren einen erheblich besseren umformwirkungsgrad aufweisen. Infolge geringerer Verformungswiderstände wird dabei weniger Umformwärme erzeugt, so daß die für eine Rekristallisation des Gefüges notwendigen Temperaturen beim Pilgerwalzen nicht erreichtbar sind. Dies wurde in der DE 38 10 261 A1 offenbar auch erkannt und dadurch berücksichtigt, daß hilfsweise vor der Kaltbearbeitung der eingesetzten Barren eine Vorerwärmung vorgesehen wurde.

Diese Vorerwärmung ist ebenfalls nachteilig, weil zwar das Temperaturniveau beim Pilgerwalzen der Barren in Richtung Rekristallisationstemperatur angehoben werden kann, doch eine exakte Ansteuerung der Rekristallisationstemperatur nicht möglich ist. Das liegt u. a. daran, daß die während des Walzprozesses vorzunehmende Kühlung und Schmierung der Walzen mit Emulsionen oder Wasser die Wärmebildung beeinflußt und eine ungleichmäßig örtlich stärkere oder schwächere Rekristallisation hervorruft. Schließlich ist auch aus energiebilanztechnischen Gründen die Vorwärmung der Barren unwirtschaftlich, wenn dieselben Barren unmittelbar im Anschluß an die Erwärmung während des Walzprozesses infolge Kühlung wieder abkühlen.

Es ist, ausgehend von dem bekannten Verfahren zur Herstellung von Rohren aus Nichteisenmetall Ziel der vorliegenden Erfindung, ein verbessertes Herstellverfahren zu finden, mit dem unter geringem Energieeinsatz eine gleichmäßige und gezielte Rekristallisation der kaltgepilgerten Rohre möglich ist.

Zur Lösung der Aufgabe ist erfindungsgemäß vorgesehen, daß das halbfertige Rohr im Anschluß an den ersten Kaltformprozeß und ggfs. weiteren Kaltumformschritten zu einem Coil aufgewickelt und als Coil dem Rekristallisationsprozeß unterzogen wird.

Dem Vorschlag der Erfindung liegt die überlegung zugrunde, daß eine wesentlich exaktere Ansteuerung der Rekristallisationstemperatur und eine günstigere Energiebilanz dann erreichbar ist, wenn im Anschluß an den Kaltformprozeß ein Erwärmen des Rohres auf die gewünschte exakte Rekristallisationstemperatur erfolgt. Dieses Erwärmen im Anschluß an den Kaltumformprozeß ist nicht nachteilig, da die aufzuwendende Energie nicht wesentlich höher ist, als beim Verfahren nach der DE 38 10 261 A1. Physikalisch ist es unerheblich, ob die Rekristallisatinswärme durch einen schlechten Umformwirkungsgrad eines, beispielsweise Schrägwalzverfahrens in Form höherer Antriebsleistungen aufgebracht wird, oder durch ein Walzverfahren mit einem guten Umformwirkungsgrad mit niedrigen Antriebsleistungen plus zusätzlicher Erwärmung im Anschluß daran auf Rekristallisationstemperatur. Dabei bietet es sich an, das den Kaltformprozeß halbfertig verlassende Rohr zu einem Coil aufzuwickeln und als Coil dem Rekristallisationsprozeß zu unterziehen.

In einer Ausgestaltung der Erfindung ist vorgesehen, daß der Rekristallisationsprozeß nach einer 85- bis 97-prozentigen Querschnittsreduction des stranggegossenen Hohlkörpers erfolgt. Derartige Querschnittsreduktionen sind beispielsweise durch Kaltpilgerwalzwerke erreichbar und erlauben es, im Anschluß an den Kaltumformprozeß die Rohre zu einem Coil aufzuwickeln, das, wie ein weiteres Merkmal der Erfindung vorsieht, einen Außendurchmesser aufweist, der dem 40- bis 60-fachen Außendurchmesser des halbfertigen Rohres entspricht und maximal 1800 mm beträgt. Damit wird die Möglichkeit geschaffen, die relativ kleinen Coils, die bei herkömmlichen Anlagen dem Ziehtrommeldurchmesser nachfolgender Ziehmaschinen angepaßt etwa 2500 mm betragen, in gasbeheizten Durchlaufglühöfen zu rekristallisieren, wie sie in Kupfer-Rohrwalzwerken ohnehin vorhanden sind. Solche Öfen werden bisher benutzt, um die Rohrsorten Halbhart und Weich herstellen zu können. Da das Weichglühen gewöhnlich erst im Anschluß an mehrere Ziehprozesse erfolgt, sind diese Öfen nicht geeignet , die sonst üblichen Coildurchmesser von 2500 mm aufzunehmen. Somit ergibt sich für die Erfindung der Vorteil, den Rekristallisationsprozeß in diesen vorhandenen Öfen vorzunehmen und dabei, anders als beim Stand der Technik, die Temperatur im halbfertigen Rohr exakt den gewünschten Temperaturen anzupassen. Die Anschaffung zusätzlicher Rekristallisationsöfen entfällt.

Um die Rekristallisation des Rohres exakt duchführen zu können wird nach einem weiteren Merkmal der Erfindung vorgeschlagen, das Coil aus einer festgelegten Zahl Windungen und Lagen des halbfertigen Rohres zu bilden.

Wenn auch das erfindungsgemäße Verfahren mit anderen Kaltformprozessen zu verwirklichen ist, so wird nach einem anderen Merkmal der Erfindung vorzugsweise vorgesehen, das Coilen und der folgende Rekristallisationsprozeß im unmittelbaren Anschluß an einen Kaltpilgerwalzprozeß durchzuführen.

## Patentansprüche

1. Herstellverfahren für nahtlose Rohre aus Nichteisenmetallen, insbesondere Kupfer und Kupferlegierungen, wobei ein stranggegossener Hohlkörper in einem Kaltformprozeß und ggfs. weiteren Bearbeitungsstufen, zu einem Rohr ausgeformt und einem Rekristallisationsprozeß unterzogen wird,
dadurch gekennzeichnet,
daß das halbfertige Rohr im Anschluß an den ersten Kaltformprozeß und ggfs. weiteren Kaltumformschritten zu einem Coil aufgewickelt und als Coil dem Rekristallisationsprozeß unterzogen wird.

2. Herstellverfahren nach Anspruch 1,
dadurch gekennzeichnet,
daß der Rekristallisationsprozeß nach einer 85 bis 97 prozentigen Querschnittsreduktion des stranggegossenen Hohlkörpers erfolgt.

3. Herstellverfahren nach Anspruch 1 und 2,
dadurch gekennzeichnet,
daß der Außendurchmesser des Coils im 40- bis 60-fachen Außendurchmesser des halbfertigen Rohres entspricht und maximal 1800 mm beträgt.

4. Herstellverfahren nach Anspruch 1 bis 3,
dadurch gekennzeichnet,
daß das Coil aus einer festgelegten Zahl von Windungen und Lagen des halbfertigen Rohres gebildet wird.

5. Herstellverfahren nach Anspruch 1 bis 4,
dadurch gekennzeichnet,
daß das Coilen und der folgende Rekristallisationsprozeß in Linie und in unmittelbarem Anschluß an einen Kaltpilgerwalzprozeß durchgeführt wird.
